Europäisches Patentamt

European Patent Office

Office européen des brevets

(11) Publication number: **0 183 415**
**A2**

## EUROPEAN PATENT APPLICATION

(21) Application number: **85308144.6**

(22) Date of filing: **08.11.85**

(51) Int. Cl.⁴: **G 02 B 21/00**
**G 01 J 3/02**

(30) Priority: **30.11.84 DE 3443727**

(43) Date of publication of application:
**04.06.86 Bulletin 86/23**

(84) Designated Contracting States:
**AT FR GB**

�$\bar{7}$1 Applicant: **C. Reichert Optische Werke AG**
**P.O. Box 95 Hernalser Hauptstrasse 219**
**A-1170 Vienna(AT)**

(72) Inventor: **Lihl, Reinhard**
**Belghofergasse 29**
**A-1120 Vienna(AT)**

(74) Representative: **Coxon, Philip et al,**
**Eric Potter & Clarkson 14 Oxford Street**
**Nottingham NG1 5BP(GB)**

(54) Photometer having image and wavelength scanning modes.

(57) A photometer adapted to receive light deflected from a microscope observation axis (15) to alternatively provide image or wavelength scanning modes. The photometer comprises an entrance axis (29) for light received from the microscope, a pin hole occluder (12) positioned at one end of the entrance axis (29), a detector axis (27) having a detector (18) at one end thereof, and first and second scanning axes (16, 28) selectively connecting the entrance axis (29). The first scanning axis (16) is provided with a first imaging means (14) positioned thereon for imaging the pin hole occluder (12 near said detector (18). The second scanning axis (28) is provided with monochromator means (32) to reflect a single wavelength of light and a second imaging means for imaging the pin hold occluder (12) near the detector (18). The photometer also includes selector means (26) for connecting a chosen scanning axis (16, 28) to said entrance and detector axes (29, 27). By means of this arrangement image scanning can be performed when said first scanning axis (16) connects said entrance and detector axes (29, 27), and wavelength scanning can be performed when said second scanning axis (28) connects said entrance and detector axes (29, 27).

./...

FIG.2

DESCRIPTION

This invention relates to a photometer having image and wavelength scanning modes.

The Leitz MPV 3 microscope photometer is a known photometer having image and wavelength scanning modes. A high resolution grating monochromator can be provided in the imaging ray path in order to perform wavelength scanning. Separate components are used for image scanning and for wavelength scanning, and these must be exchanged in order to switch from one mode to another. Performing such an exchange is inconvenient to the operator. In addition, the components are expensive and there is a risk of damage during each exchange.

It is an object of the present invention to provide a photometer in which no exchange of components is necessary when changing from image scanning to wavelength scanning and vice versa.

According to the present invention there is provided a photometer adapted to receive light deflected from a microscope observation axis to alternatively provide image or wavelength scanning modes, which comprises an entrance axis for light received from the microscope, a pin hole occluder positioned at one end of said entrance axis, a detector axis having a detector at one end thereof, first and second scanning axes selectively connecting said entrance axis, said first scanning axis having a first imaging means positioned therealong for imaging said pin hole occluder near said detector, said second scanning axis having monochromator means adapted to reflect a single wavelength of light sequentially and a second imaging means for imaging the pin hole occluder near the detector, and selector means for connecting a chosen scanning axis to said entrance and detector axes, whereby said image is scanned when said first scanning axis connects said entrance and detector axes and the light wavelengths are scanned when said second scanning axis connects said entrance and detector axes.

In one embodiment the selector means comprises a pair of deflectors, one of said pair being selectively positionable on each corresponding side of said imaging means. Preferably, one of said pair of deflectors intersects said entrance axis at the junction of said entrance and said first scanning axes to deflect light to said monochromator means and the other of said pair of deflectors intersects said detector axis at the junction of said first scanning and said detector axes to deflect light from said monochromator means to said detector. Preferably also, the pair of deflectors are movable as a unit. The monochromator means may conveniently include the second imaging means.

In another embodiment said selector means comprises a selectively movable deflector to deflect light from said first imaging means to said detector when said movable deflector is located in a first position and permits light to pass undeflected when located in a second position. Preferably the monochromator means receives light from said occluder, when said movable deflector is in said second position. A deflector may be provided to reflect light to said detector from said monochromator means.

In both embodiments the first imaging means may comprise a lens or lens system.

The imaging of the pin hole occluder at a point near the detector causes the different lengths of the light paths in image scanning and in wavelength scanning to be equalised.

Advantageously an interference graduated filter, which is selectively movable into and out of the detector axis, is provided near to the point near the detector at which the pin hole occluder is imaged. This interference graduated filter can be used when the first scanning axis is connected to the detector and entrance axes. With this arrangement wavelength scanning can be carried out using either scanning axis.

The photometer according to the invention enables selection of either image scanning or wavelength scanning without the need to change the expensive components. Instead, it is merely necessary to push the selector means from one position to another position in order to change the scanning axis connected to the detector and entrance axes. If desired the selector means may be electronically actuated and a switch can be provided for selecting the positions.

The photometer according to the invention is not only easier to operate than earlier photometers, but is also cheaper to produce.

Reference is now made to the accompanying drawings in which:

Figure 1 is a schematic diagram of part of a microscope for use with a photometer according to the invention;

Figure 2 is a schematic diagram in plan of one embodiment of a photometer according to the invention; and

Figure 3 is a schematic side view of another embodiment of photometer according to the invention.

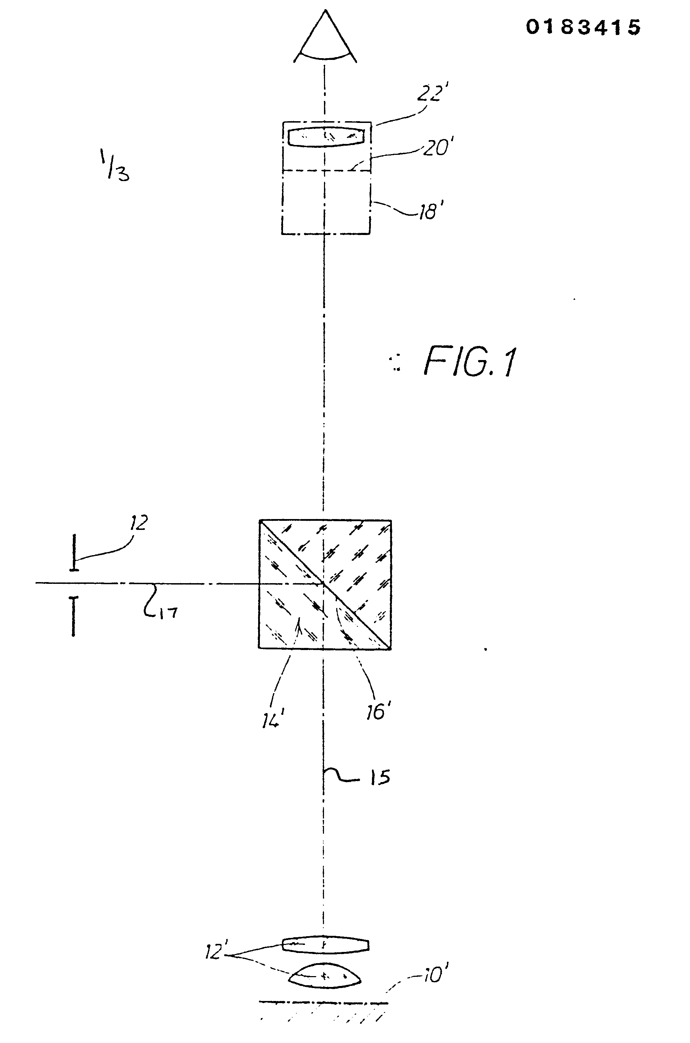

Figure 1 is a schematic diagram of a microscope. A microscope objective 12' is positioned in a microscope observation axis 15, and is disposed above an object plane 10'. A microscope eyepiece 18' having an intermediate image plane 20' is also disposed in the observation axis 15; the microscope eyepiece 20' includes an occular 22'.

An object (not shown) on the object plane 10' is imaged by the microscope objective 12' directly onto the intermediate image plane 20' of the microscope eyepiece 18'.

Optical dividing means in the form of a divider prism 14' having a divider surface 16' is disposed in the observation axis 15. In Figure 1 light is directed to the left from the divider surface 16' along an axis 17 to a pin hole occluder 12.

The microscope objective 12' images the object in a plane in which the pin hole occluder 12 is disposed. The pin occluder 12 may comprise a disc of an opaque material having a plurality of different sized apertures therein. A selected aperture can be aligned with the axis 17 whereby light passing along the axis 17 in alignment with the aperture can pass through the aperture, but the light which is not aligned with the aperture cannot pass through the pin hole occluder 12.

The pin hole occluder 12 is arranged to be movable transverse to the axis 17 so that when it is desired to perform image scanning, any selected part of the image formed at the pin hole occluder 12 can be scanned. This transverse movement may be achieved, for example, using a motor (not shown).

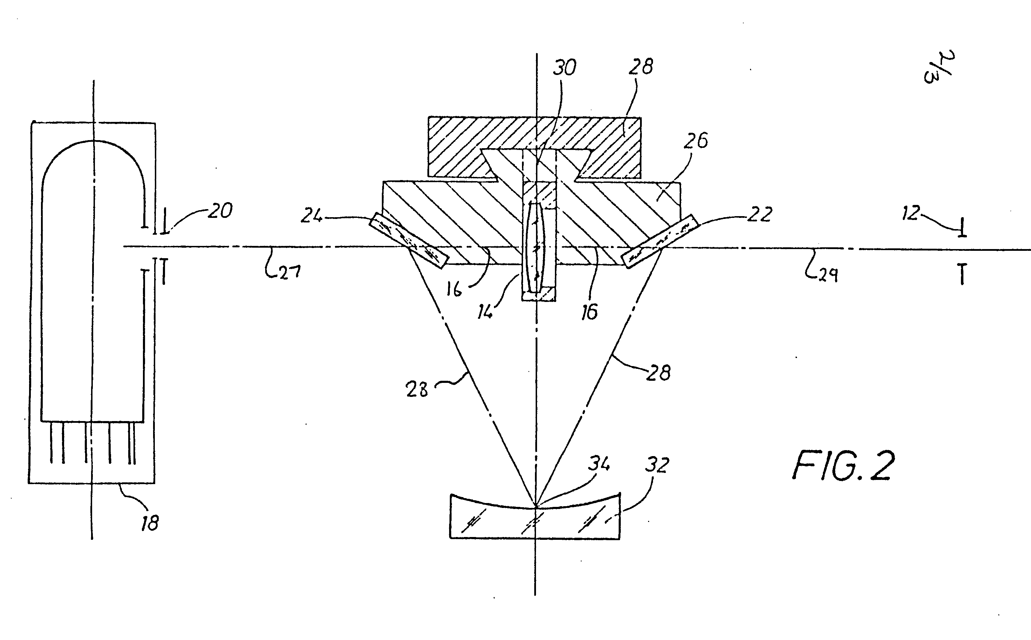

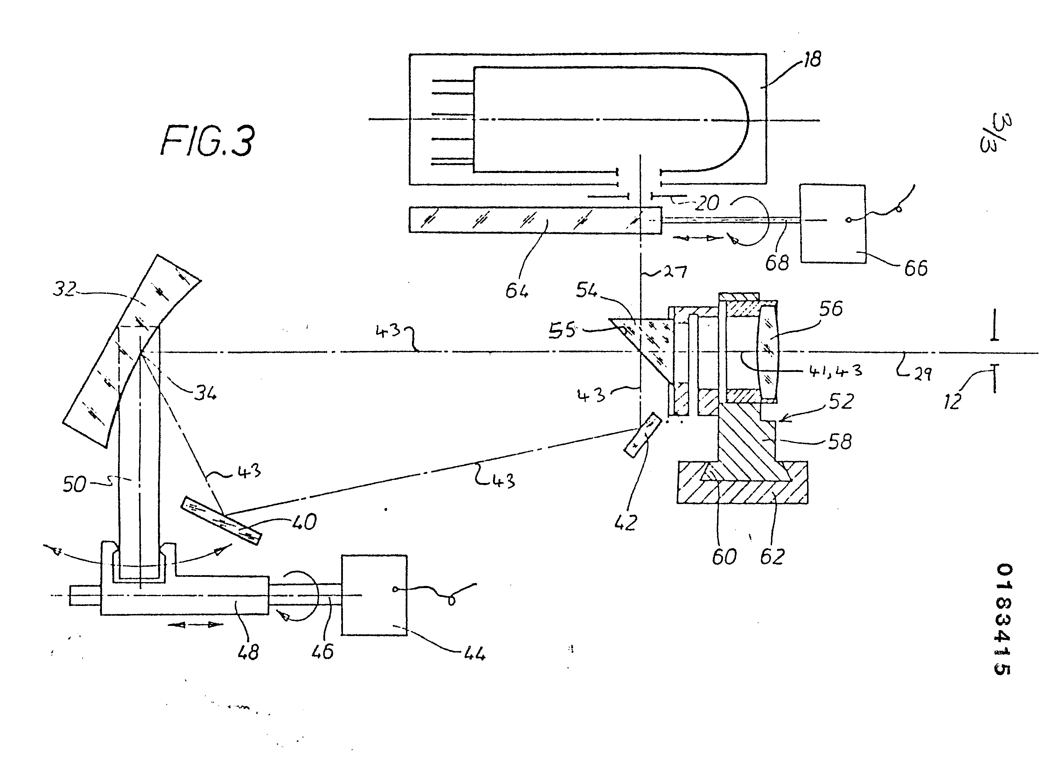

The divider prism 14' and the pin hole occluder 12 form part of a photometer which is shown in more detail in Figures 2 and 3.

One embodiment of photometer is shown in Figure 2. In this embodiment a detector 18 is positioned on a detector axis 27 which can be selectively connected to a first scanning axis 16, or to a second scanning axis 28. The detector 18 may, for example, be a photomultiplier.

The pin hole occluder 12 lies at one end of an entrance axis 29. The other end of the entrance axis 29 is selectively connected to either the first scanning axis 16, or to the second scanning axis 28.

First imaging means in the form of a lens or lens system 14 is positioned in the first scanning axis 16 for imaging the pin hole occluder 12 at a point 20, near the detector 18. The lens 14 is used for image scanning.

Monochromator means in the form of a grating monochromator 32 is positioned in the second scanning axis 28 for reflecting a single wavelength of light. The monochromator 32 includes second imaging means for imaging the pin hole occluder 12 at the point 20. The monochromator 32 is pivotally movable about an axis 34 in a known manner. The axis 34 is substantially transverse to the plane of the drawing.

Selector means is provided for connecting a selected one of the scanning axes 16 and 28 to the detector axis 27 and to the entrance axis 29. The selector means comprises a carrier 26 which carries two deflectors in the form of mirrors 22 and 24.

The carrier 26 is slidably mounted to a pedestal 28 by means of a dovetailed guide 30. This arrangement permits the carrier 26 to slide in a direction transverse to the first scanning axis 16.

The mirrors 22 and 24 are movable with the carrier 26 as a single unit, and are movable between first and second positions. In the first position, the mirrors 22 and 24 are positioned out of the alignment with the entrance axis 29, the detector axis 27 and first scanning axis 16, whereby the first scanning axis 16 is connected to the detector axis 27 and the entrance axis 29. The lens 14 is not movable relative to the first scanning axis 16, and remains positioned on the first scanning axis when the mirrors 22 and 24 are in the first position. When the mirrors 22 and 24 are in the first position image scanning can be carried out, the pin hole occluder 12 being imaged at the point 20 via the lens 14 along the entrance axis 29, the first scanning axis 16 and the detector axis 27.

In the second position the mirrors 22 and 24 are positioned on the entrance axis 29 and the detector axis 27 to connect the second scanning axis 28 with the entrance and detector axes. In the second position mirrors 22 and 24 partially surround the lens 14 and serve to disconnect the entrance axis 29 and the detector axis 27 from the first scanning axis 16.

When the mirrors 22 and 24 are in the second position wavelength scanning can be carried out with the monochromator 32, the pin hole occluder 12 being imaged at the point 20 by the second imaging means, along the entrance axis 29, the second scanning axis 28 and the detector axis 27. The mirror 22 deflects light received along the entrance axis 29 to the monochromator 32, and the mirror 24 deflects light received from the monochromator 32 along the detector axis 27 to the detector 18.

In the embodiment shown in Figure 2 both the first scanning axis 16 and the second scanning axis 28 are in positions fixed relative to the entrance axis 29 and the detector axis 27.

Figure 3 shows another embodiment of photometer according to the invention. Several of the components shown in Figure 3 are similar to those shown in Figure 2, and like parts have been designated with like reference numerals.

In Figure 3 the detector 18 (which may be a photomultiplier) is again positioned on a detector axis 27. The detector 18 can be selectively connected to a first scanning axis 41, or to a second scanning axis 43.

The pin hole occluder 12 lies at one end of the entrance axis 29 and the other end of the entrance axis 29 can be selectively connected to either the first scanning axis 41 or to the second scanning axis 43.

First imaging means in the form of a lens or lens system 56 is positioned on the first scanning axis 41, for imaging the pin hole occluder 12 at the point 20 near the detector 18. The lens 56 is used for image scanning.

The monochromator means in the form of the grating monochromator 32 is positioned on the second scanning axis 43 for reflecting a single wavelength of light. The monochromator 32 includes second imaging means for imaging the pin hole occluder 12 at the point 20. A deflector in the form of stationary mirrors 40 and 42 is provided on the second scanning axis 43 for deflecting light from the monochromator 32 to the detector 18.

Selector means 52 is provided for connecting a chosen scanning axis to the detector axis 27 and the entrance axis 29. The selector means 52 comprises a carrier 58 to which the lens 56 and a deflector in the form of a deflecting prism 54 are fixed. The prism 54 has a deflecting surface 55.

The carrier 58 is slidably mounted to a pedestal 62 by means of a dovetailed guide 60. This arrangement permits the carrier 58 to slide in a direction transverse to the entrance axis 29. The first scanning axis 41 extends through, and moves with, lens 56 and the prism 54.

The carrier 58 together with the lens 56, the prism 54 and the first scanning axis 41 are movable between first and second positions. In the first position the lens 56 and the prism 54 are positioned in alignment with the entrance axis 29 and the detector axis 27. In addition, the first scanning axis 41 is positioned in alignment with the entrance axis 29 and the detector axis 27 thereby connecting the first scanning axis to the entrance axis and to the detector axis. When in the first position, the prism 54 serves to disconnect the second scanning axis 43 from the entrance axis 29 and the detector axis 27.

When the prism 54 is in the first position image scanning can be carried out, the pin hole occluder 12 being imaged at the point 20 by the lens 56 along the entrance axis 29, the first scanning axis 41 and the detector axis 27. The surface 55 of the prism 54 deflects light passing along the first scanning axis 41 through 90° along the detector axis 27.

In the second position the lens 56, the prism 54 and the first scanning axis 41 are positioned out of alignment with the entrance axis 29 and the detector axis 27. This connects the second scanning axis 43 to the entrance axis 29 and the detector axis 27. The first scanning axis 41 is disconnected from the entrance axis 29 and the detector axis 27 since it has been moved out of alignment.

When the second position is selected wavelength scanning can be carried out with the monochromator 32, the pin hole occluder 12 being imaged at the point 20 along the entrance axis 29, the second scanning axis 43 and the detector axis 27.

The monochromator 32 can be pivotted for wavelength scanning about the axis 34 in order to decode the light intensities from the wavelength. This may be achieved by means of a motor 44 which rotates a spindle 46 to move a nut 48 mounted on the spindle. An arm 50 is connected to the nut 48 and to the monochromator 32 so that axial movement of the nut causes pivotal movement of the monochromator 32 about the axis 34. The arm 50 is loosely connected to the nut 48.

An interference graduated filter 64 is arranged so that it can be moved into the detector axis 27 by means of a motor 66 and a spindle 68. Rotation of the spindle 68 by the motor 66 causes movement of the filter 64.

The filter 64 may be used in wavelength scanning, so that even when the first position has been selected with the first scanning axis 41 connected to the detector axis 27 and the entrance axis 29, it is still possible to conduct wavelength scanning. When the filter 64 is in use, it would not be possible to carry out image scanning simultaneously.

CLAIMS

1. A photometer adapted to receive light deflected from a microscope observation axis to alternatively provide image or wavelength scanning modes, characterised by an entrance axis for light received from the microscope, a pin hole occluder positioned at one end of said entrance axis, a detector axis having a detector at one end thereof, first and second scanning axes selectively connecting said entrance axis, said first scanning axis having a first imaging means positioned thereon for imaging said pin hole occluder near said detector, said second scanning axis having monochromator means adapted to reflect a single wavelength of light sequentially and a second imaging means for imaging the pin hole occluder near the detector, and selector means for connecting a chosen scanning axis to said entrance and detector axes, whereby said image is scanned when said first scanning axis connects said entrance and detector axes and the light wavelengths are scanned when said second scanning axis connects said entrance and detector axes.

2. A photometer according to Claim 1 characterised in that the selector means comprises a pair of deflectors, one of said pair being selectively positionable on each corresponding side of said imaging means, one of said pair of deflectors intersects said entrance axis at the junction of said entrance and said first scanning axis to deflect light to said monochromator and the other of said pair of deflectors intersects said detector axis at the junction of said first scanning and said detector axes to deflect light from said monochromator to said detector.

3. A photometer according to Claim 2 characterised in that said pair of deflectors are movable as a unit.

4. A photometer according to Claim 2 characterised in that said monochromator includes said second imaging means.

5.    A photometer according to Claim 1 characterised in that said selector means comprises a selectively movable deflector to deflect light from said first imaging means to said detector when said movable deflector is located in a first position and permits light to pass undeflected when located in a second position.

6.    A photometer according to Claim 5 characterised in that said monochromator means receives light from said occluder, when said movable deflector is in said second position.

7.    A photometer according to Claim 6 characterised in that a deflector reflects light to said detector from said monochromator means.

8.    A photometer according to Claim 1 characterised in that the first imaging means comprises a lens system.

9.    A photometer according to Claim 1 characterised in that an interference graduated filter is selectively movable into and out of the detector axis for conducting wavelength scanning.

1/3

FIG.1

FIG.2

0183415

FIG.3